# EUROPÄISCHE PATENTANMELDUNG

(11) **EP 1 031 307 A2**
(43) Veröffentlichungstag der Anmeldung: **30.08.2000**
(21) Anmeldenummer: 00103317.4
(22) Anmeldetag: 18.02.2000
(51) Int. Cl.: A47J 37/07

(54) **Kochgerät**

(30) Priorität: 22.02.1999 DE 19907584; 18.06.1999 DE 19927832
(71) Anmelder: Rietl GmbH, 71552 Backnang-Waldrems (DE); Greissing, Tobias, Dipl.-Industriedesigner (FH), 97957 Wittinghausen (DE)
(72) Erfinder: Rietl, Herbert, 71397 Leutenbach (DE); Rietl, Michael, 71552 Backnang-Waldrems (DE); Greissing, Tobias, Dipl.-Industriedesigner (FH), 97957 Wittighausen (DE)
(74) Vertreter: Winter, Martina Dr.

(57) **Zusammenfassung**

Die vorliegende Erfindung betrifft ein Kochgerät (1,2, 3, 4, 5, 6) mit einem Gestell (10) und einem Halteelement (31, 71), welches an dem Gestell (10) angeordnet ist und eine beheizbare Kocheinrichtung (38, 48, 58, 68, 78, 88) aufnimmt. Erfindungsgemäß ist vorgesehen, daß das Gestell (10) klappbar ist und ein Verankerungselement (11) und ein Tragelement (18) aufweist und das Halteelement (31, 71) am Verankerungselement (11) reversibel verankert ist und auf dem Tragelement (18) aufliegt. Damit können mit einem Gestell (10) und ein oder zwei Halteelementen (31, 71) zahlreiche Kochgeräte bereitgestellt werden. Das Gestell (10) kann in zusammengeklapptem Zustand platzsparend verstaut werden.

## Beschreibung

Die vorliegende Erfindung betrifft ein Kochgerät mit einem Gestell und einem Halteelement, welches an dem Gestell angeordnet ist und eine beheizbare Kocheinrichtung aufnimmt.

Ein gattungsgemäßes Kochgerät ist aus dem DE-GM 91 12 841.2 bekannt. In dieser Druckschrift ist ein Gartenwok offenbart, der an einem Gestell angeordnet ist, an welchem unter der Schale ein Gasbrenner befestigt ist. Aus dem DE-GM 93 13 252.2 ist ferner eine Grillvorrichtung bekannt, bei welcher der Grillrost gegen eine Wokpfanne austauschbar ist.

Die bekannten Kochgeräte weisen jedoch ein sperriges und unhandliches Gestell auf, so daß sie im Winter viel Lagerplatz benötigen und nur schwer handhabbar sind. Sie sind ferner nur mit Gas oder Kohle heizbar und nur als Wok oder Grill einsetzbar.

Die Aufgabe der vorliegenden Erfindung besteht demnach darin, ein Kochgerät der o.g. Art derart weiterzubilden, daß es vielseitig einsetzbar, auf verschiedene Weise beheizbar und leicht handhabbar ist.

Die Lösung besteht in einem Kochgerät mit den Merkmalen des Anspruchs 1. Erfindungsgemäß ist also vorgesehen, daß das Gestell klappbar ist und ein Verankerungselement und ein Tragelement aufweist und das Halteelement am Verankerungselement reversibel verankert ist und auf dem Tragelement aufliegt.

Damit steht ein vielseitiges Kochgerät zur Verfügung. Da das Halteelement reversibel am Gestell befestigt werden kann, wobei nur ein Verankerungselement und ein Tragelement vorgesehen sind, können verschiedene Halteelemente aller Größen und Formen für beliebige Kocheinrichtungen auf das Gestell aufgelegt werden, sofern sie nur an dem Verankerungselement befestigt werden können. Das Halteelement liegt auf dem Tragelement des Gestells auf, so daß das Gestell keine Größenbegrenzung für das Halteelement darstellt. Das Gestell ist klappbar und daher einfach und platzsparend zu verstauen. Am Gestell können verschiedenste Heizelemente befestigt werden.

Vorteilhafte Weiterbildungen ergeben sich aus den Unteransprüchen. Das Halteelement kann bspw. mindestens eine Aussparung aufweisen, mittels derer es am Verankerungselement fixiert ist. Die Aussparung kann z. Bsp. eine Nut sein, in die das Verankerungselement eingesteckt ist. Eine bevorzugte Weiterbildung sieht vor, daß die Aussparung in Form einer Öffnung ausgebildet ist, durch welche das Verankerungselement durchgesteckt werden kann.

Das Halteelement weist vorzugsweise eine Ausnehmung auf, in welcher die Kocheinrichtung aufgenommen ist. Unterhalb der Ausnehmung kann dann die Heizeinrichtung, bspw. der Brenner, befestigt werden. Die Kocheinrichtung kann in besonders vorteilhafter Weise reversibel in der Ausnehmung aufgenommen sein, so daß verschiedene Kocheinrichtungen gegeneinander ausgetauscht werden können.

Eine andere Ausgestaltung des erfindungsgemäßen Kochgeräts besteht darin, daß das Halteelement wiederum eine Ausnehmung aufweist und die flächige Kocheinrichtung auf dem Halteelement (71, 81) aufliegt. Auch in diesem Fall kann die Heizeinrichtung unter der Ausnehmung befestigt werden, und verschiedene flächige Kocheinrichtungen können gegeneinander ausgetauscht werden. Die flächige Kocheinrichtung kann aber auch reversibel oder fest mit dem Halteelement verbunden sein. In letzterem Fall werden dann einfach verschiedene Halteelemente mit verschiedenen daran befestigten Kocheinrichtungen gegeneinander ausgetauscht.

Das Halteelement ist vorzugsweise so ausgebildet, daß es mindestens eine Arbeitsfläche aufweist. Auf der Arbeitsfläche können bspw. das Kochgut oder Gewürze abgelegt werden oder verschiedene Zutaten vorbereitet werden. Das Halteelement kann ferner mindestens ein Behältnis und/oder mindestens eine weitere Aussparung zur Aufnahme von Kochgerätschaften u. dgl. aufweisen.

Die Kocheinrichtung ist bspw. als Wok, Paellapfanne, Crepe-Platte, Ceran-Kochfeld, Grill (78) oder als sog. "heißer Stein" ausgebildet Hierbei weist der Grill vorzugsweise ein Kohlebecken, welches in der Ausnehmung aufgenommen ist und einen Grillrost auf, welcher über dem Kohlebecken angeordnet ist. Die Kocheinrichtung kann mit Brennspiritus, Brennpaste, Gas, Sonnenenergie oder Kohle bzw. Holzkohle beheizt werden. Die Sonnenenergie läßt sich bspw. dadurch gewinnen, daß die Kocheinrichtung in Form eines Sammelspiegels für Sonnenstrahlen ausgebildet ist, in welchen bspw. ein Kochtopf eingestellt werden kann. Diese Vorrichtung ist unter der Bezeichnung "Solarkochtopf" an sich bekannt.

Das klappbare Gestell weist in einer besonders bevorzugten Weiterbildung ein erstes und ein zweites, im wesentlichen U-förmiges Bauteil mit je zwei langen Schenkeln und je einer Querstrebe auf, wobei die Bauteile über eine senkrecht zu den Schenkeln verlaufende Drehachse schwenkbar miteinander verbunden sind. Hierbei dient das erste Bauteil als Verankerungselement und die Querstrebe des zweiten Bauteils als Tragelement. Zur Stabilisierung des Gestells in aufgeklapptem Zustand ist es vorteilhaft, einen parallel zur Drehachse verlaufender Querträger vorzusehen, welcher unterhalb der Drehachse angeordnet ist und im aufgeklappten Zustand als Anschlag für das erste Bauteil des Gestells dient. Ferner kann eine Halteeinrichtung für ein Heizelement, bspw. einen Spiritusbrenner, einen Gasbrenner oder einen Holzkohlebehälter vorgesehen sein. Diese Halteeinrichtung kann bspw. einen Längsträger aufweisen, welcher an einem Ende mindestens ein oberes und ein unteres Klemmelement aufweist, mit welchen der Längsträger klemmend am Gestell zwischen Drehachse und Querträger befestigbar ist. Am anderen Ende des Längsträgers kann eine Tragfläche für das Heizelement vorgesehen sein.

Wenn die langen Schenkel des ersten und des zweiten Bauteils in der Seitenansicht konkav gebogen sind, wirkt das Gestell besonders elegant und ästhetisch ansprechend.

Im folgenden wird ein Ausführungsbeispiel der vorliegenden Erfindung anhand der beigefügten Zeichnungen näher beschrieben. Es zeigen:
- Figuren 1a und 1b: ein erstes Ausführungsbeispiel des erfindungsgemäßen Kochgeräts in der Form eines Woks in einer perspektivischen, schematischen Darstellung;
- Figur 2: das Gestell des Ausführungsbeispiels aus den Figuren 1a und 1b in einer perspektivischen, schematischen Darstellung;
- Figuren 3 und 4: Detailansichten des Gestells aus Figur 2;
- Figur 5: eine weitere Detailansicht des Gestells mit aufgesetztem Halteelement;
- Figur 6a: einen Querschnitt durch eine Detailansicht einer weiteren Ausführungsform eines Gestells mit einem zweiteiligen Lager mit innenliegendem Anschlag in auseinandergezogener Darstellung;
- Figur 6b: eine Vorderansicht der beiden Teile des Lagers mit dem Anschlag;
- Figur 7: eine Detailansicht einer Halteeinrichtung für eine Heizeinrichtung;
- Figur 8: eine weitere Ansicht des Halteelements mit dem Wok aus Figur 1;
- Figur 9a: eine Detailansicht des Halteelements mit dem Wok aus Figur 8 mit einem Trennelement;
- Figur 9b: eine schematische perspektivische Darstellung des Trennelements;
- Figuren 10a und 10b: ein zweites Ausführungsbeispiel des erfindungsgemäßen Kochgeräts in der Form einer Paellapfanne in einer perspektivischen, schematischen Darstellung;
- Figuren 11a und 11b: ein drittes Ausführungsbeispiel des erfindungsgemäßen Kochgeräts in der Form einer Crepe-Platte in einer perspektivischen, schematischen Darstellung;
- Figuren 12a und 12b: ein viertes Ausführungsbeispiel des erfindungsgemäßen Kochgeräts in der Form eines Cerankochfeldes in einer perspektivischen, schematischen Darstellung;
- Figuren 13a und 13b: ein fünftes Ausführungsbeispiel des erfindungsgemäßen Kochgeräts in der Form eines Grills in einer perspektivischen, schematischen Darstellung;
- Figuren 14a und 14b: ein sechstes Ausführungsbeispiel des erfindungsgemäßen Kochgeräts in der Form eines "heißen Steines" in einer perspektivischen, schematischen Darstellung;
- Figur 15: eine Kocheinheit für ein siebtes Ausführungsbeispiel des erfindungsgemäßen Kochgeräts in der Form eines mit einem Heiz- und Warmhaltebereich kombininierten Woks.

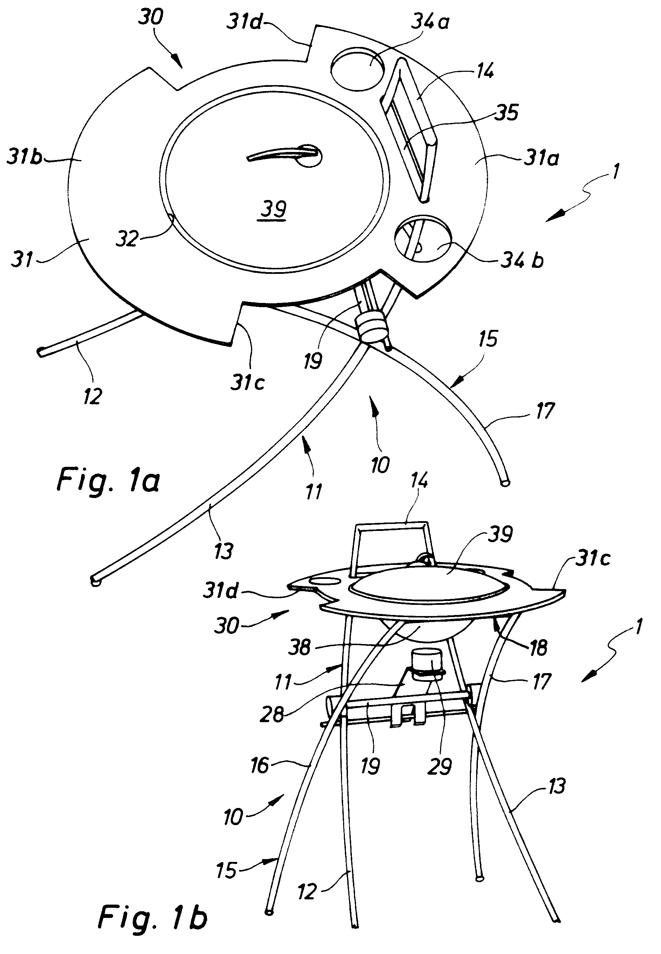

Die Figuren 1a und 1b zeigen, in perspektivischer Darstellung schräg von oben bzw. von der Seite, ein erstes Ausführungsbeispiel eines erfindungsgemäßen Kochgeräts 1 in Form eines Woks. Das Kochgerät 1 weist ein klappbares Gestell 10 auf, bspw. aus Metall wie Edelstahl oder Aluminium und ggf. oberflächenbehandelt, mit einem ersten Bauteil 11 und einem zweiten Bauteil 15. Die Bauteile 11 und 15 sind im wesentlichen U-förmig mit je zwei langen, zueinander parallelen, in der Seitenansicht gleichsinnig konkav gebogenen Schenkeln 12, 13 und 16, 17, welche über je eine obere Querstrebe 14, 18 miteinander verbunden sind. Die beiden Bauteile 11, 15 sind um eine Drehachse 19 schwenkbar.

Auf das ausgeklappte Gestell 10 ist die eigentliche Kocheinheit 30 aufgesetzt. Sie weist ein Halteelement in Form einer etwa runden oder ovalen Platte 31 auf, die aus einem beliebigen wärmebeständigen Material, bspw. Holz oder Metall, bestehen kann. An einem Ende 31a der Platte 31 ist eine Aussparung 35 vorgesehen, durch welche das obere Ende des Bauteils 11 mit der Querstrebe 14 hindurchragt und auf einer Querstange 21 aufliegt. Dadurch wird die Platte 31 an ihrem Platz fixiert. Das andere Ende 31b der Platte 31 liegt auf der Querstrebe 18 des zweiten Bauteils 15 auf und wird auf diese Weise sicher in der Waagrechten gehalten. Die Platte 31 weist ferner eine weitere in etwa kreisförmige Ausnehmung 32 auf, in welche der mit einem Deckel 39 ausgestattete Wok 38 lose eingelassen ist. Weitere Aussparungen 34a, 34b dienen zur Aufnahme von Kochgerätschaften u. dgl. Die Platte 31 weist ferner seitliche Ausnehmungen 31c, 31d auf, um den Zugang zum Wok 38 zu erleichtern.

Am Gestell 10 ist eine Halteeinrichtung 28 für eine Heizeinrichtung 29, bspw. einen Spiritusbrenner oder einen Brenner für Brennpaste, vorgesehen, wobei die Heizeinrichtung möglichst unter dem Boden des Woks 38 angeordnet ist. Zu sehen ist von der Heizeinrichtung 29 ein Windschutz in Form einer zylinderförmigen Röhre mit Löchern, die in Schlitze eingesteckt und arretiert werden kann, welche in der Halteeinrichtung 28 vorgesehen sind.

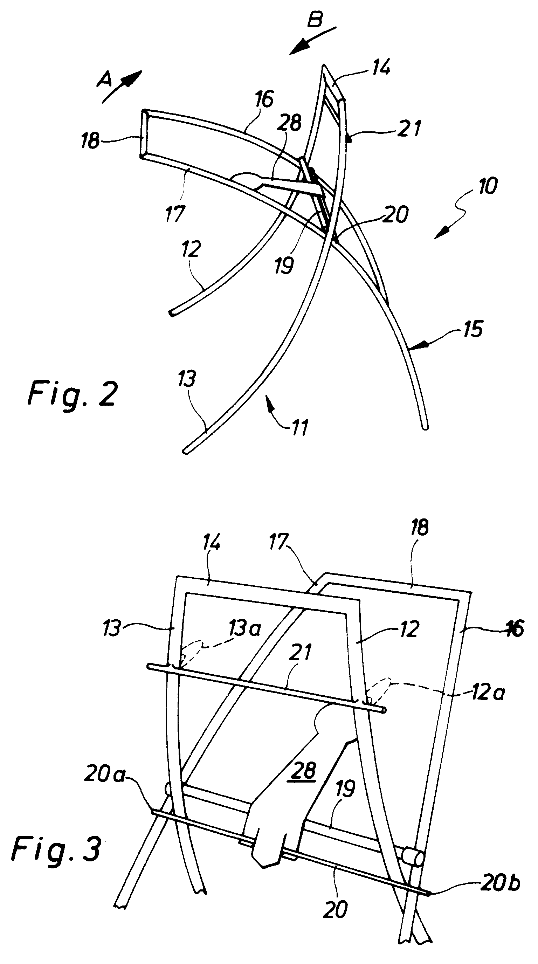

Die Konstruktion des Gestells 10 ist im Detail aus den Figuren 2 bis 5 ersichtlich. Die Bauteile 11, 15 sind in Richtung der Pfeile A, B in Figur 2 um eine Drehachse 19 drehbar, so daß das ganze Gestell 10 zusammengeklappt werden kann. Die Bauteile 11, 15 sind dabei so bemessen, daß sie in zusammengeklapptem Zustand ineinandergeschoben werden können, d.h. das Bauteil 11 ist höher und breiter bemessen als das Bauteil 15, so daß ein "inneres U" (Bauteil 15) und ein "äußeres U" (Bauteil 11) resultieren. Daher ist das Gestell 10 in zusammengeklapptem Zustand praktisch zweidimensional und sehr platzsparend zu verstauen.

Die Drehachse 19 weist zwei Lager 19a, 19b auf, um welche die Bauteile 11, 15 geschwenkt werden können. Dabei ist die Drehachse 19 so angeordnet, daß die Querstrebe 14 des ersten Bauteils 11 in ausgeklapptem Zustand sich oberhalb der Querstrebe 18 des zweiten Bauteils 15 befindet. Das Ende der Schwenkbewegung zum Aufklappen (entgegen der Pfeile A, B in Figur 2), bei der das zweite Bauteil 15 durch das erste Bauteil 11 geführt wird, wird durch einen am Bauteil 11 etwas unterhalb der Drehachse 19 angebrachten Querträger 20 markiert. Der Querträger 20 ist etwas breiter als das Bauteil 11, so daß seine Enden 20a, 20b etwas überstehen. Diese Enden dienen als Anschlagpunkte für die Schenkel 16, 17 des zweiten Bauteils 15, so daß im aufgeklappten Zustand ein sicherer Stand des Gestells 10 gewährleistet ist. Eine weitere Querstange 21 ist in der Nähe der Querstrebe 14 am Bauteil 11 befestigt und dient zur Stütze der Platte 31. Die konkave Krümmung der langen Schenkel 12, 13 bzw. 16, 17 ist dabei so ausgestaltet, daß die Querstange 21 in ausgeklapptem Zustand auf derselben Höhe liegt wie die Querstrebe 18.

Statt der Stange 21 selbst können auch zwei (in Figur 3 gestrichelt dargestellte) Nasen 121a, 121b vorgesehen sein, welche die Platte 31 stützen können.

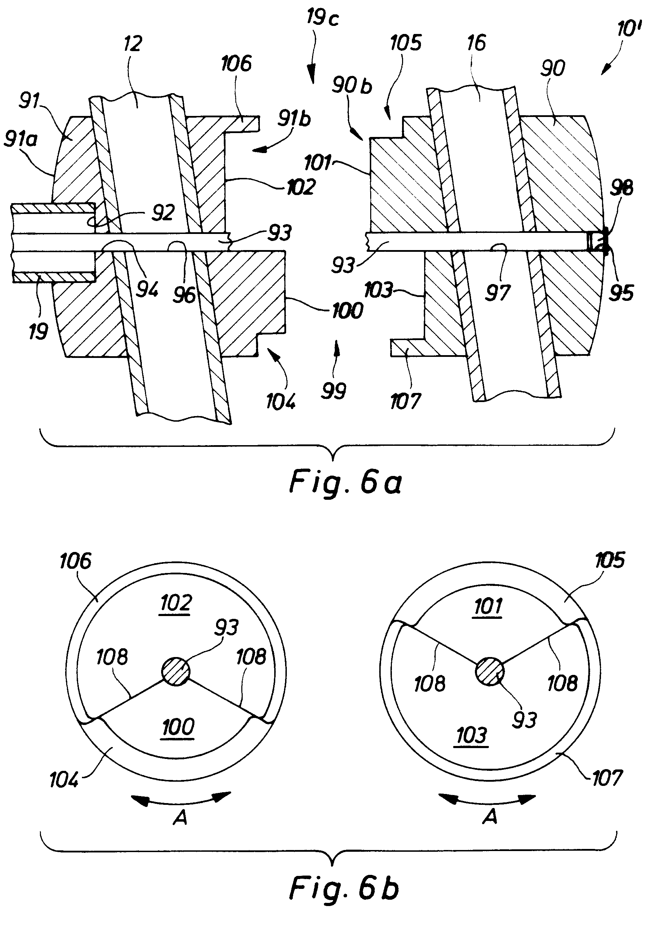

Aus den Figuren 6a und 6b ist eine weitere Ausführungsform eines Lagers 19c für ein Gestell 10' dargestellt. Das Lager 19c weist einen innen liegenden Anschlag auf, so daß die überstehenden Enden 20a, 20b des Querträgers 20 als Anschlagspunkte nicht mehr nötig sind. Das Lager 19c besteht aus einem äußeren Teil 90 und einem inneren Teil 91. Durch den äußeren Teil 90 verläuft der lange Schenkel 16 (bzw. der lange Schenkel 17; nicht dargestellt) und durch den inneren Teil 91 verläuft der lange Schenkel 12 (bzw. der lange Schenkel 13; nicht dargestellt). An der Innenfläche 91a des inneren Teils 91 ist eine Ausnehmung 92 vorgesehen, in welcher ein freies Ende der Drehachse 19 aufgenommen ist. Die Drehachse 19 und die beiden Teile 90 und 91 des Lagers 19c sind durch eine Verbindungsstrebe 93 fest miteiander verbunden. Die Verbindungsstrebe 93 tritt durch die Drehachse 19, die Teile 90, 91 und die langen Schenkel 16, 12 (bzw. 17, 13) mittig hindurch. Zu diesem Zweck weisen die beiden Teile 90, 91 je eine Durchgangsbohrung 94, 95 auf, und die langen Schenkel 16, 12 (bzw. 17, 13) weisen ebenfalls eine entsprechende Durchgangsbohrung 96, 97 auf. Die Durchgangsbohrung 95 des äußeren Teiles 90 des Scharniers 19c ist auf der Seite der Außenfläche des Teils 90 mit einem Stopfen 98 oder einer Abdeckung o. dgl. verschlossen.

Das innenliegende Scharnier 99 des Lagers 19c wird durch die Gestaltung der kreisförmigen Außenfläche 91b des inneren Teils 91 und die Gestaltung der kreisförmigen Innenfläche 90b des äußeren Teils 90 gebildet, wie sie den Figuren 6a und 6b zu entnehmen ist. Beide Flächen 90b, 91b weisen einen erhabenen flächigen Bereich 100, 101 und einen demgegenüber zurückgesetzten flächigen Bereich 102, 103 auf. Die erhabenen flächigen Bereiche 100, 101 umfassen etwa ein Drittel ihrer jeweiligen Fläche 91b, 90a, während die zurückgesetzten flächigen Bereiche 102, 103 die restlichen zwei Drittel einnehmen. Die erhabenen flächigen Bereiche 100, 101 sind ferner an ihrem äußeren Rand von einer Vertiefung 104, 105 umgeben, während die zurückgesetzten flächigen Bereiche 102, 103 an ihrem äußeren Rand in analoger Weise von einem Vorsprung 106, 107 umgeben sind. Die beiden Innenflächen 90b des äußeren Teils 90 und 91b des inneren Teils 91 des Scharniers 19c sind derart zueinander angeordnet, daß jeweils ein Vorsprung 106, 107 bzw. erhabener Bereich 100, 101 und eine Vertiefung 104, 105 bzw. ein zurückgesetzter Bereich 102, 103 einander gegenüber liegen, so daß die zurückgesetzten Bereiche 102, 103 mit den gegenüberliegenden erhabenen Bereichen 100, 101 in Eingriff sind. Die beiden Teile 90, 91 sind in Richtung des Pfeiles A gegeneinander drehbar, soweit die erhabenen Bereiche 100, 101 innerhalb der zurückgesetzten Bereiche bewegt werden können. Die Kanten 108, welche die erhabenen und die zurückgesetzten Bereich voneinander trennen, wirken dabei als Anschlagkanten.

Wenn derartige Lager 19c verwendet werden, kann natürlich auf die überstehenden Enden 20a, 20b des Querträgers 20 verzichtet werden, da diese zusätzlichen Anschlagpunkte für die Schenkel 16, 17 des zweiten Bauteils 15 dann nicht mehr benötigt werden. Es kann auch auf die Querstange 20 insgesamt verzichtet werden, sofern sie nicht als Befestigungselement für eine Heizeinrichtung 29 (siehe dazu unten) benötigt wird.

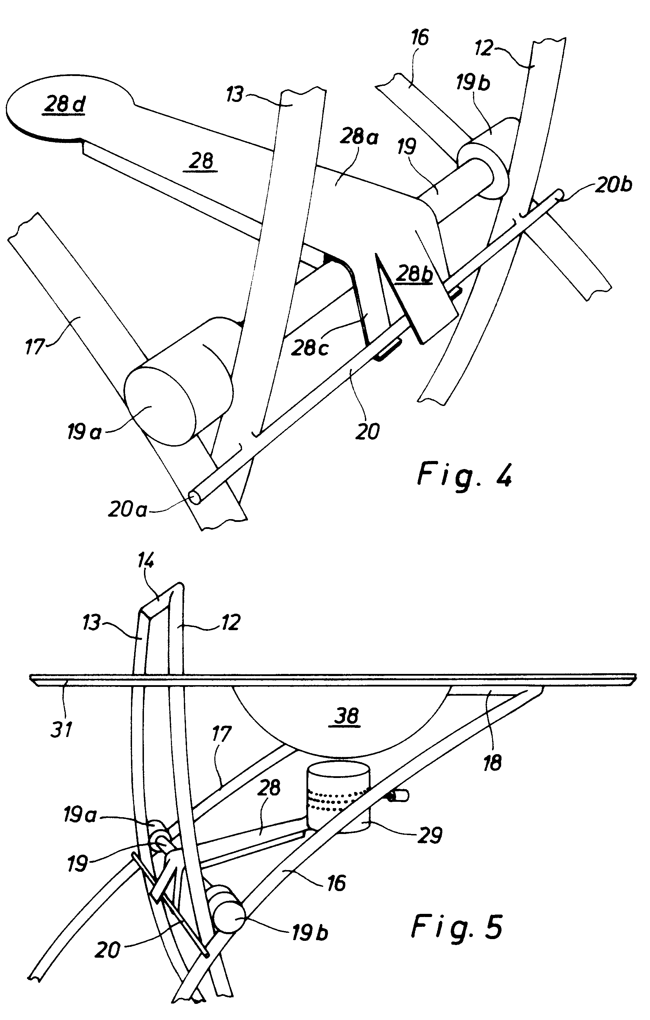

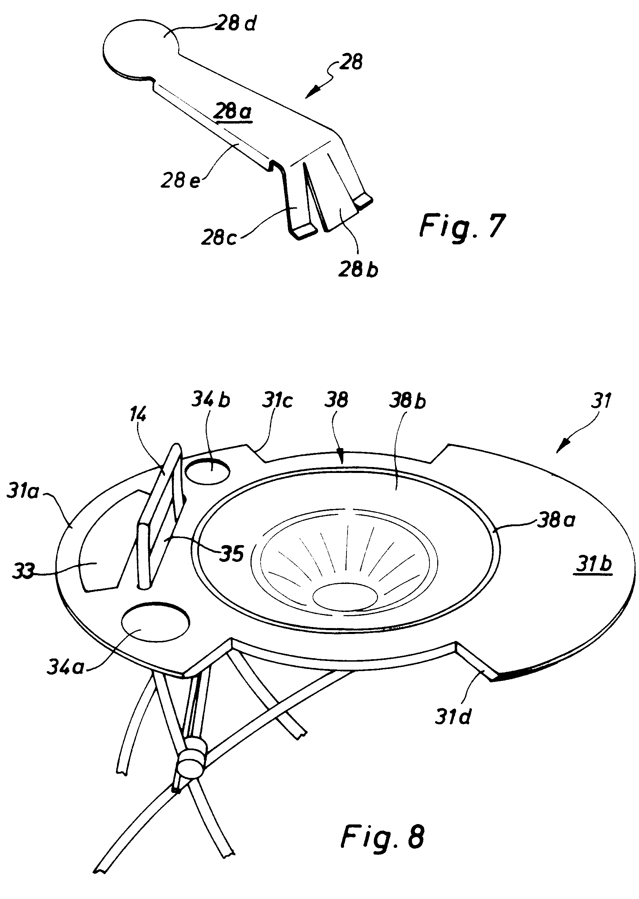

An der Drehachse 19 und am Querträger 20 ist eine Halteeinrichtung 28 für eine Heizeinrichtung 29 befestigt, die in Figur 7 nochmals dargestellt ist. Die Halteeinrichtung kann als Halteblech ausgestaltet sein, mit einem Längsträger 28a, der von der Drehachse 19 bis zu einem zentralen Punkt unter der Kocheinrichtung, bspw. dem Wok 38 reicht, so daß eine am Ende des Längsträgers 28a vorgesehene Tragfläche 28d möglichst genau in der Mitte unter der Kocheinrichtung positioniert ist. Auf die Tragfläche 28d wird eine Heizeinrichtung, bspw. ein Spiritusbrenner oder ein Brenner für Brennpaste oder eine Gaspatrone (ggf. der Fa. Kisag AG, CH-4512 Bellach) gesetzt, der, möglichst in der Mitte der Kocheinrichtung angeordnet, für eine gleichmäßige Beheizung sorgt. Am anderen Ende des Längsträgers 28a sind mindestens ein oberes Klemmelement 28b und mindestens ein, im Ausführungsbeispiel zwei Klemmelemente 28c vorgesehen, die in einem Winkel von bspw. etwa 40 bis 50° vom Längsträger nach unten abgekantet sind. Die unteren Klemmelemente 28c sind an ihrem freien Ende nochmals in einem Winkel von etwa 40° bis 50° nach oben abgekantet. Das Halteelement 28 wird so am Gestell 10 positioniert, daß der Knick zwischen dem Längsträger 28 und den Klemmelementen 28b, 28c auf der Drehachse 19 zu liegen kommt. Das obere Klemmelement 28b wird über dem Querträger 20 und die unteren Klemmelemente 28c werden unter dem Querträger 20 angeordnet, wobei die abgekanteten freien Enden den Querträger 20 umgreifen (vgl. Figur 4). Auf diese Weise wird das Halteelement zwischen Drehachse 19 und Querträger 20 klemmend gehalten.

In Figur 8 ist nochmals die Platte 31 im Detail dargestellt. Man erkennt, daß der Wok 38 einen Rand 38a aufweist, der auf der Platte 31 aufliegt, so daß er sicher in der Ausnehmung 32 gehalten ist. An den Rand 38a kann sich auch wie im Ausführungsbeispiel dargestellt, noch ein breiterer Rand 38b anschließen, der als Wärmrand dient und auf dem ggf. noch ein Trennelement arretiert werden kann, hinter der man bspw. Zutaten bereithalten oder das Essen warmhalten kann. Man erkennt ferner die Aussparungen 34a, 34b, in welche z. Bsp. Kochutensilien eingesteckt oder auf ähnliche Weise wie der Wok 38 Behältnisse, bspw. zur Aufnahme von Kochutensilien, eingelassen werden können. Ferner ist eine Arbeitsfläche 33 zu erkennen, auf der bspw. das Kochgut abgelegt oder vorbereitet werden kann. Auf ähnliche Weise kann das breite vordere Ende 31b der Platte 31 genutzt werden.

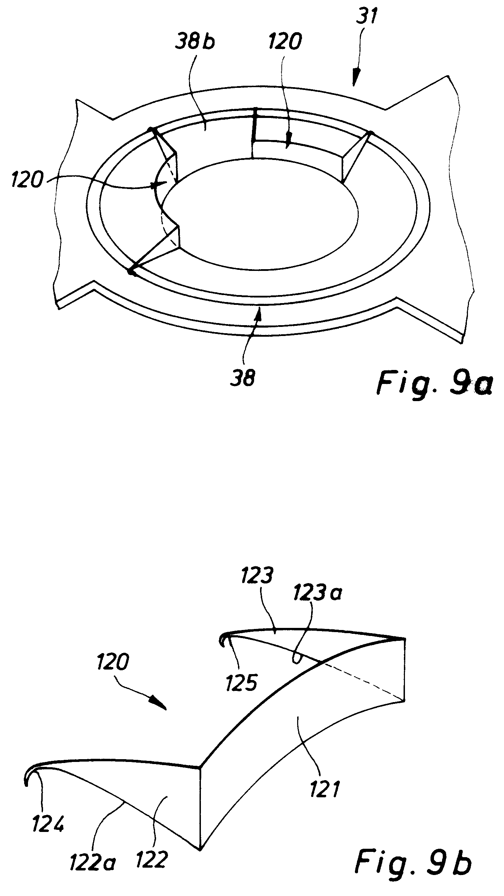

Die Figuren 9a und 9b zeigen das erwähnte Trennelement 120. Das Trennelement 120 besteht aus einer Trennwand 121, die eine Krümmung aufweist, welche der Krümmung der inneren Kante des Randes 38b entspricht. An die Seitenkanten der Trennwand schließen sich zwei Halteelemente 122, 123 an, die im wesentlichen dreieckig sind und in einem Haken 124, 125 auslaufen. Die Länge der Kanten 122a, 123a der Halteelemente entspricht der Breite des Randes 38b. Das Trennelement 120 wird so auf den Wok 38 aufgesetzt, daß die Trennwand 121 entlang der inneren Kante des Randes 38b verläuft und mit den Haken 124, 125 an der äußeren Kante des Randes 38a eingehakt. Hinter der Trennwand 121 können Speisen auf dem breiten Rand 38b abgelegt und warmgehalten werden, ohne daß sie in den Topf zurückrutschen. Das Trennelement 120 besteht vorzugsweise aus Metall, bspw. Blech.

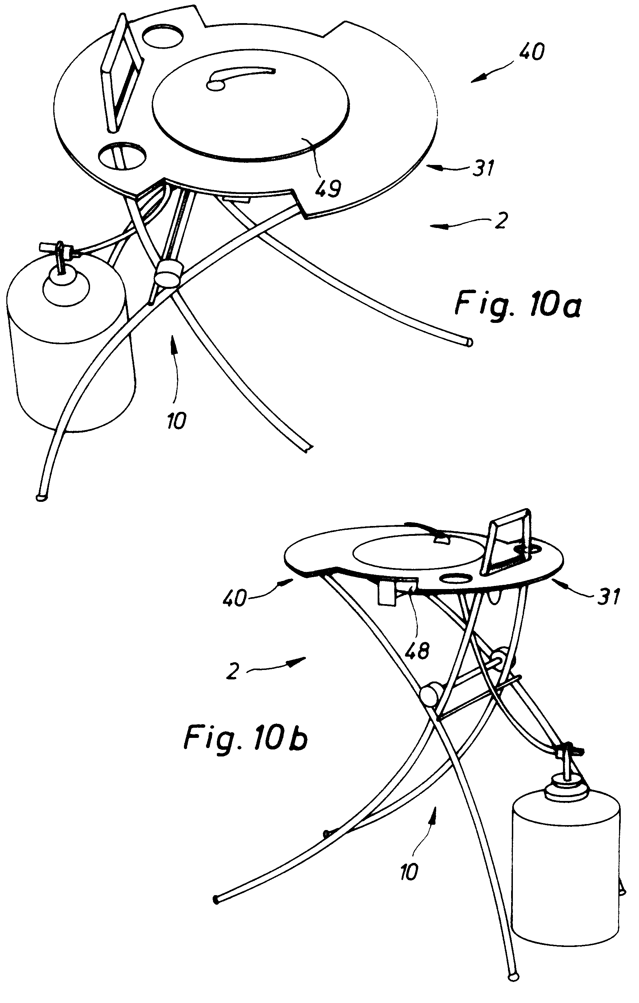

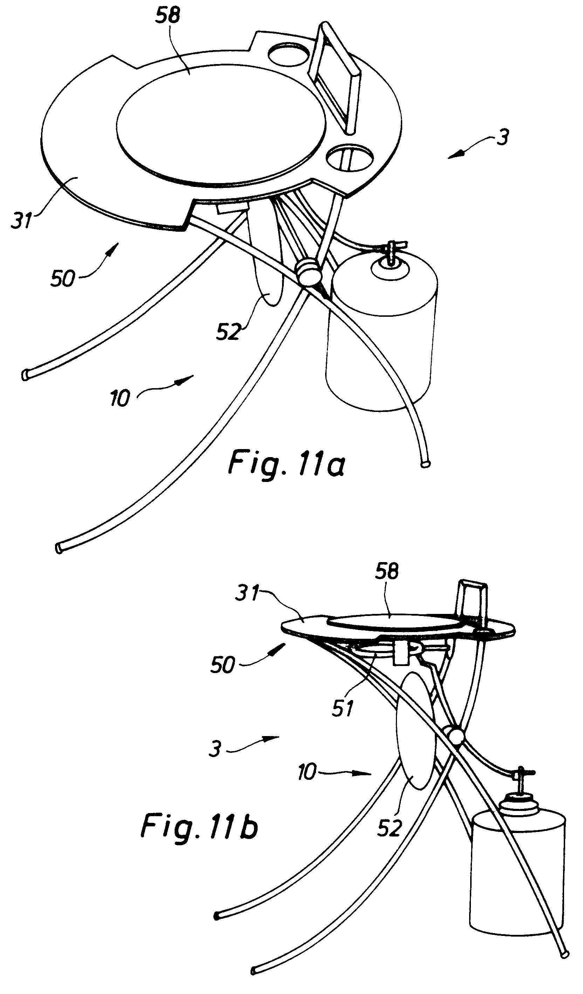

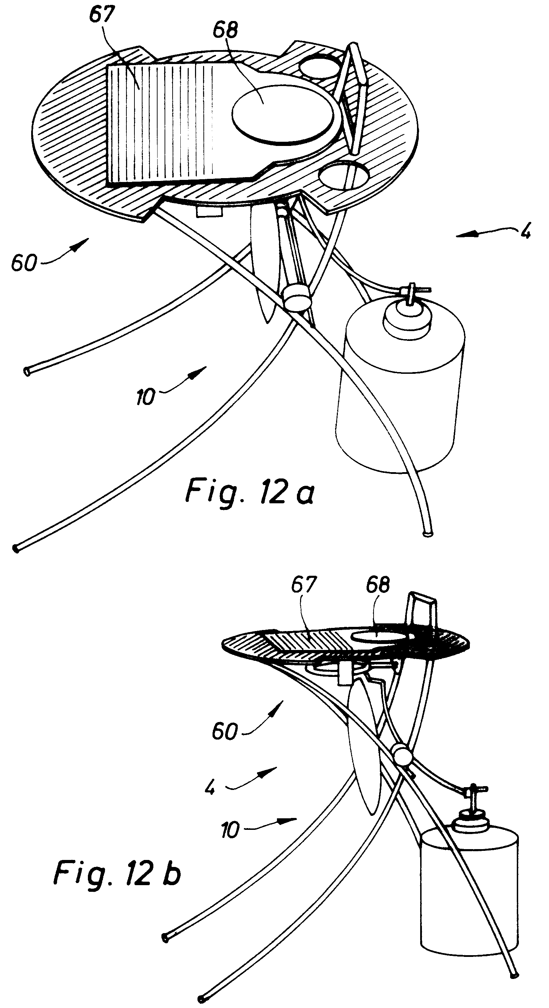

Da der Wok 38 nur lose in der Platte 31 gehalten ist, kann er leicht gegen beliebige andere Kocheinrichtungen ausgetauscht werden. Ebenso kann die Halteeinrichtung 28 vom Gestell abgenommen und der für die Beheizung des Woks 38 vorgesehene Brenner durch andere Heizeinrichtungen ersetzt werden. Die Figuren 10a und 10b zeigen bspw. ein erfindungsgemäßes Kochgerät 2 mit einer Kocheinheit 40 mit demselben Gestell 10 und derselben Platte 31, in deren Ausnehmung 32 diesmal eine Paellapfanne 48 in Form eines niedrigen Zylinders mit Deckel 49 eingelassen ist Unter der Paellapfanne 48 ist ein Gasbrenner, bspw. ein ringförmiger, belüfteter, evtll. mehrflammiger Gasrohrbrenner vorgesehen, der mittels einer hier nicht dargestellten, an der Unterseite der Paellapfanne 48 vorgesehenen Halterung befestigt und über einen Schlauch mit einer Gasflasche, bspw. mit Propangas, verbunden ist. In den Figuren 11a und 11b ist eine weiteres erfindungsgemäßes Kochgerät 3 mit einer Kocheinheit 50 mit nochmals derselben Platte 31 auf demselben Gestell 10 zu sehen, wobei diesmal die Ausnehmung 32 mit einer Crepeplatte 58 abgedeckt ist. Unterhalb der Crepeplatte ist ein ringförmiger Gasbrenner 51 befestigt, der mit einer Abschirmung 52 versehen und wiederum über einen Schlauch mit einer Gasflasche, bspw. mit Propangas, verbunden ist. Die Figuren 12a und 12b zeigen ein weiteres erfindungsgemäßes Kochgerät 4 mit einer Kocheinheit 60 aus derselben Platte 31, bspw. aus geriffeltem Metall auf demselben Gestell 10, wobei die Aussparung 32 mit einer Kontaktgrillfläche 67 abgedeckt ist, die ferner ein Cerankochfeld 68 trägt.

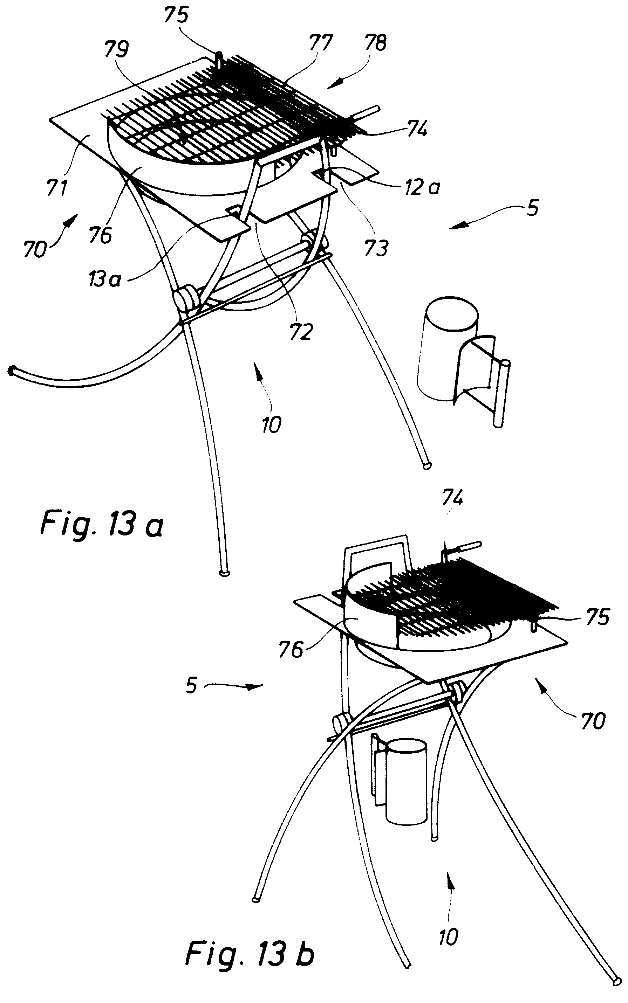

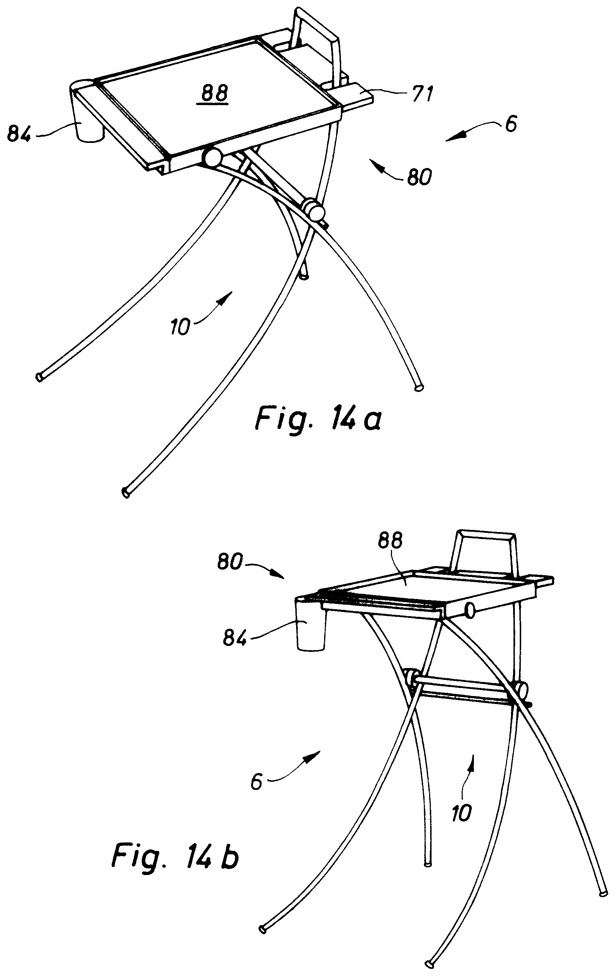

Die Figuren 13a und 13b zeigen ein Ausführungsbeispiel eines erfindungsgemäßen Kochgeräts 5 mit demselben Gestell 10, wobei die Kocheinheit 70 eine rechteckige Platte 71 aus Metall mit seitlichen Aussparungen 72, 73 aufweist. Die Platte 71 sitzt auf dem Querträger 21 und auf Vorsprüngen 12a, 13a auf, die an den langen Schenkeln 12, 13 des Bauteils 11 angebracht sind und mit Schlitzen versehen sind, in welche an der Unterseite der Platte 71 angebrachte Stifte o. dgl. zur Arretierung eingesteckt werden können. Die Platte 71 weist ebenfalls eine Ausnehmung auf, in die ein Kohlebecken 79 eines Grills 78 lose eingelassen ist. Über dem Kohlebecken 79 ist ein Rost 77 höhenverstellbar vorgesehen, der zum einen an einem an der Platte 71 arretierbaren Windschutz 76 und zum anderen an Stiften 74, 75 abnehmbar und höhenverstellbar befestigt ist. Die Figuren 14a, 14b schließlich zeigen ein weiteres Kochgerät 6 mit einer Kocheinheit 80 mit derselben Platte 71 wie in den Figuren 13a, 13b, auf welcher diesmal ein "heißer Stein" 88 abgelegt ist, der z. Bsp. auch als Sushiplatte verwendet werden kann. Seitlich an der Platte 71 ist ein Behältnis 84, bspw. für Kochutensilien vorgesehen.

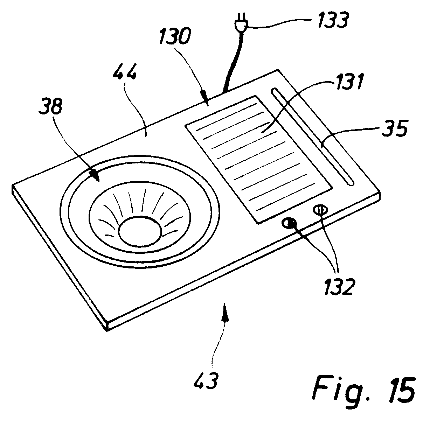

Figur 15 schließlich zeigt ein weiteres Ausführungsbeispiel für eine Kocheinheit 90 mit einer Platte 91. Die Platte 91 weist ebenfalls eine Ausnehmung auf, in die in der oben beschriebenen Weise ein Wok 38 eingelassen ist, der mittels einer der oben beschriebenen Heizeinrichtungen, vorzugsweise einem Gasbrenner beheizt wird. Zwischen dem Wok 38 und der für die Aufnahme des oberen Endes des Bauteils 11 mit der Querstrebe 14 vorgesehenen Aussparung 35 ist nun zusätzlich ein Heiz-und Warmhaltebereich 130 vorgesehen. Dabei handelt es sich im wesentlichen um eine metallene Grillplatte 131, die elektrisch beheizt wird, bspw. mittels einer in die Platte 91 unterhalb der Grillplatte 131 eingelassenen Heizmatte o. dgl., wobei ein oder mehrere Schalter 132 vorgesehen sind, die zur Temperaturregelung dienen. Damit kann die Temperatur der Grillplatte 131 so geregelt werden, daß sie je nach Einstellung nach Art eines Kontaktgrills zum Warmhalten, zum Garen von Gemüse, Fisch und hellem Fleisch und zum Grillen von Steaks verwendet werden kann. Der elektrische Anschluß erfolgt vorzugsweise mittels eines Steckers 133.

Mit ein und demselben Gestell 10, welches platzsparend und formschön konstruiert ist und einer oder maximal zwei Platten 31, 71 lassen sich also eine Vielzahl von Kochgeräten zaubern. Es handelt sich somit um eine Produktfamilie, in der die Abmessungen so gehalten sind, daß alle Zubehörteile wie Paellapfanne, Wok, Grillrost etc. zueinander und zum Gestell und dem Halteelement passen.

## Patentansprüche

1. Kochgerät (1,2, 3, 4, 5, 6) mit einem Gestell (10) und einem Halteelement (31, 71), welches an dem Gestell (10) angeordnet ist und eine beheizbare Kocheinrichtung (38, 48, 58, 68, 78, 88) aufnimmt, dadurch gekennzeichnet, daß das Gestell (10) klappbar ist und ein Verankerungselement (11) und ein Tragelement (18) aufweist und das Halteelement (31, 71) am Verankerungselement (11) reversibel verankert ist und auf dem Tragelement (18) aufliegt.

2. Kochgerät nach Anspruch 1, dadurch gekennzeichnet, daß das Halteelement (31, 71) mindestens eine Aussparung (35, 72, 73) aufweist, mittels derer es am Verankerungselement (11) fixiert ist.

3. Kochgerät nach einem der vorhergehenden Ansprüche, dadurch gekennzeichnet, daß das Halteelement (31) eine Ausnehmung (32) aufweist, in welcher die Kocheinrichtung (38, 48, 58, 78) aufgenommen ist.

4. Kochgerät nach Anspruch 3, dadurch gekennzeichnet, daß die Kocheinrichtung (38, 48, 58, 78) reversibel in der Ausnehmung (32) aufgenommen ist.

5. Kochgerät nach einem der Ansprüche 1 oder 2, dadurch gekennzeichnet, daß das Halteelement (71, 81) eine Ausnehmung (72, 82) aufweist und die flächige Kocheinrichtung (68, 88) auf dem Halteelement (71, 81) aufliegt.

6. Kochgerät nach einem der vorhergehenden Ansprüche, dadurch gekennzeichnet, daß das Halteelement (31, 71, 81) mindestens eine Arbeitsfläche (33) aufweist.

7. Kochgerät nach einem der vorhergehenden Ansprüche, dadurch gekennzeichnet, daß das Halteelement (31, 71, 81) mindestens ein Behältnis (84) und/oder mindestens eine weitere Aussparung (34a, 34b) zur Aufnahme von Kochgerätschaften u. dgl. aufweist.

8. Kochgerät nach einem der vorhergehenden Ansprüche, dadurch gekennzeichnet, daß die Kocheinrichtung ein Wok (38), eine Paellapfanne (48), eine Crepe-Platte (58), ein Ceran-Kochfeld (68), ein Grill (78), ein "heißer Stein" (88) und/oder eine Grillplatte (131) ist.

9. Kochgerät nach Anspruch 8, dadurch gekennzeichnet, daß der Wok (38) einen schmalen Rand (38a) und einen breiten Rand (38b) aufweist, auf welchem ein Trennelement (120) befestigbar ist.

10. Kochgerät nach Anspruch 9, dadurch gekennzeichnet, daß das Trennelement (120) eine Trennwand (121) und zwei Halteelemente (122, 123) aufweist, mittels derer es so am Wok (38) befestigt ist, daß die Trennwand entlang der Innenkante des breiten Randes (38b) verläuft.

11. Kochgerät nach Anspruch 8, dadurch gekennzeichnet, daß der Grill (78) ein Kohlebecken (79), welches in der Ausnehmung aufgenommen ist und einen Grillrost (77) aufweist, welcher über dem Kohlebecken (79) angeordnet ist.

12. Kochgerät nach einem der vorhergehenden Ansprüche, dadurch gekennzeichnet, daß die Kocheinrichtung (38, 48, 58, 68, 78, 88) mit Brennspiritus, Brennpaste, Gas, Sonnenenergie oder Kohle bzw. Holzkohle beheizbar ist.

13. Kochgerät nach einem der vorhergehenden Ansprüche, dadurch gekennzeichnet, daß das Gestell (10) ein erstes (11) und ein zweites (15), im wesentlichen U-förmiges Bauteil mit je zwei langen Schenkeln (12, 13; 16, 17) und je einer Querstrebe (14; 18) aufweist, wobei die Bauteile (11, 15) über eine senkrecht zu den Schenkeln verlaufende Drehachse (19) schwenkbar miteinander verbunden sind.

14. Kochgerät nach Anspruch 13, dadurch gekennzeichnet daß das erste Bauteil (11) als Verankerungselement und die Querstrebe (18) des zweiten Bauteils (15) als Tragelement dient.

15. Kochgerät nach einem der Ansprüche 13 oder 14, dadurch gekennzeichnet, daß ein parallel zur Drehachse (19) verlaufender Querträger (20) vorgesehen ist, welcher unterhalb der Drehachse (19) angeordnet ist und im aufgeklappten Zustand als Anschlag für das erste Bauteil (11) des Gestells (10) dient.

16. Kochgerät nach einem der Ansprüche 13 oder 14, dadurch gekennzeichnet, daß die Drehachse (19) mittels zweier Lager (19c) schwenkbar ist, welche einen innenliegenden Anschlag (99) aufweisen.

17. Kochgerät nach einem der Ansprüche 13 bis 16, dadurch gekennzeichnet, daß die langen Schenkel (12, 13; 16,17) des ersten (11) und des zweiten Bauteils (15) in der Seitenansicht konkav gebogen sind.

18. Kochgerät nach einem der Ansprüche 13 bis 17, dadurch gekennzeichnet, daß eine Halteeinrichtung (28) für eine Heizeinrichtung (29) vorgesehen ist.

19. Kochgerät nach Anspruch 18, dadurch gekennzeichnet, daß die Halteeinrichtung (28) einen Längsträger (28a) aufweist, welcher an einem Ende mindestens ein oberes (28b) und ein unteres (28c) Klemmelement aufweist, mit welchen der Längsträger (28a) klemmend am Gestell (10) zwischen Drehachse (19) und Querträger (20) befestigbar ist.

20. Kochgerät nach Anspruch 19, dadurch gekennzeichnet, daß der Längsträger (28a) an seinem anderen Ende eine Tragfläche (28d) für eine Heizeinrichtung aufweist.
